# EUROPEAN PATENT APPLICATION

(11) **EP 1 271 848 A1**
(43) Date of publication of application: **02.01.2003**
(21) Application number: 00987777.0
(22) Date of filing: 27.12.2000
(51) Int. Cl.: H04L 12/28

(54) **IDENTIFICATION CODE MANAGEMENT SYSTEM FOR HOME NETWORK**

(71) Applicant: MATSUSHITA ELECTRIC INDUSTRIAL CO., LTD., Kadoma-shi, Osaka 571-8501 (JP)
(72) Inventor: UENO, Reiko, Takarazuka-shi, Hyogo 665-0835 (JP); SHINTANI, Yasuyuki, Kobe-shi, Hyogo 658-0082 (JP)
(74) Representative: Dempster, Benjamin John Naftel
(86) International application number: JP0009365
(87) International publication number: WO02054678

(57) **Abstract**

A unique identification code (ID) is given to each appliance in each sub-network of a home network (HBS). An appliance out of use is deleted. The system can be automatically updated. One router is used as a parent router and only the router is made to manage the identification codes. The IDs include the IDs of the sub-networks and the IDs of the appliances in the sub-networks. Information about the year when an ID is given is given to the ID. After a certain period of time, the presence of each ID is checked. Each appliance has information about the grade of the system, and the information is utilized for updating the appliance having a router function when an appliance is newly installed.

## Description

### TECHNICAL FIELD

The present invention relates to so-called home networks, and more particularly to protocols and processes for assigning, acquiring, and deleting identification codes of individual appliances.

### BACKGROUND ART

### General Background Art

In recent years, various many appliances are used in homes, buildings, and on the floors and in the sections in the buildings. Attempts have been made to control such appliances by integrating them into a home network (or a home bus system) in order to attain a better living or working environment, less energy consumption, and good work efficiency.

More specifically, many homes use, for example, air-conditioning appliances, refrigerators, electric fans, bath water heaters utilizing solar heat, microwave ovens, water heaters, electric *kotatsus* (Japanese heating apparatus comprising a low table with an electric heater underneath), air heaters, electric clocks, television receivers, lighting appliances, and the like; since the time and the season in which these appliances are used are highly interrelated with one another, the operating conditions are taken into consideration and thus the operations and standby states of these appliances are suitably controlled in order to achieve improvement of a living environment and reduce energy consumption.

Some specific examples are as follows: in the summer season, the automatic temperature setting of a water heater in bathing hours is set at a lower temperature than in the winter season since a water heater for bath utilizing solar heat can often produce sufficient hot water and thus the temperature needs not be so high; even in the summer season, the operation of an air-conditioning appliance is lowered during a very short time in which a microwave oven is used in order to reduce the electric power consumed at one time in the home as a whole; or in a room, output power or transmission of the air conditioning appliance is controlled by detecting the presence or absence of a human in the room with a sensor.

Other examples include the following: in an office, operating conditions of appliances serving as heat sources that are being in operation (in use) are detected and the output power of an air conditioning appliance is controlled accordingly; unnecessary lightings in a room are turned off based on the hours and the positions of appliances that are being in operation (in use); and in a college, lightings and air conditioning appliances are turned off in the classrooms in which classes are not being conducted.

Furthermore, in addition to merely controlling the starting and stopping according to the season and the time, attempts are being considered and made to carry out caretaking and surveillance of homes in which only the elderly are present or of infants when parents are absent by detecting the operating conditions. Some specific examples are as follows: abnormality is detected and a home help service person is contacted over the telephone network if, for example, the toilet door is not opened or closed for a certain period of time, if the sound volume of the television is too loud, or if various appliances are unnaturally operated, for example, if an air cooling appliance and a heater are simultaneously operated; or when a mobile telephone carried by a child goes out of the range of the phone station that manages the neighboring area of the home, it sends out a warning through an audio message or the screen of a television receiver.

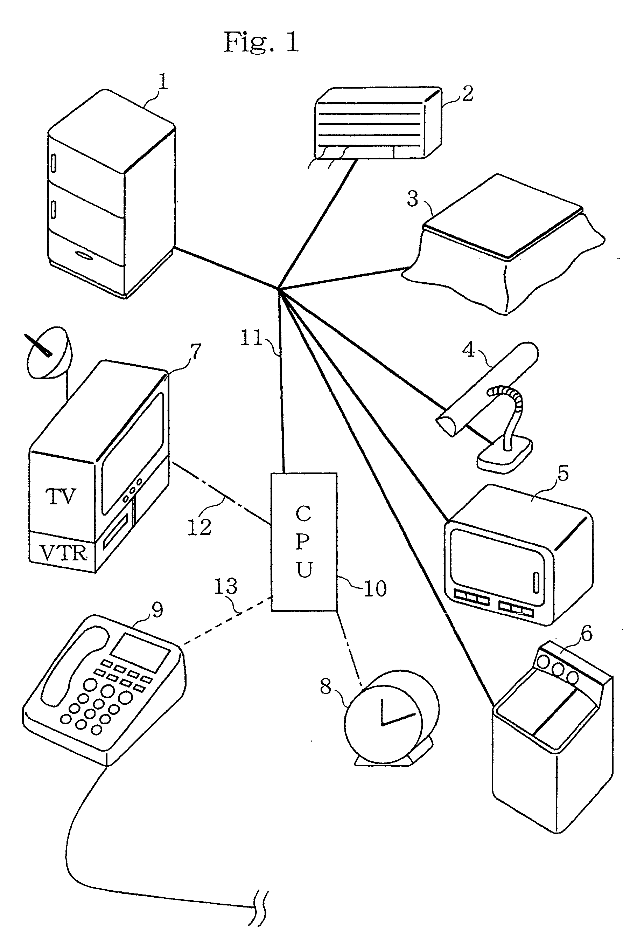

The connecting state of various appliances to achieve the above is schematically shown in Fig. 1.

As seen in the figure, an electric refrigerator 1, an air conditioning appliance 2, an electric *kotatsu* 3, a fluorescent lamp 4, a microwave oven 5, and a laundry washing machine 6 are connected to a CPU 10 by electric power lines 11, thus making up a single sub-network. A television receiver 7 and a clock 8 are connected to the CPU 10 by infrared rays 12, thus making up a single sub-network. A telephone set 9 is connected to the CPU 10 by wireless communication 13, thus making up a single sub-network.

In addition to the above, individual appliances may be connected by other means such as ultrasonic waves or may be connected by a plurality of means.

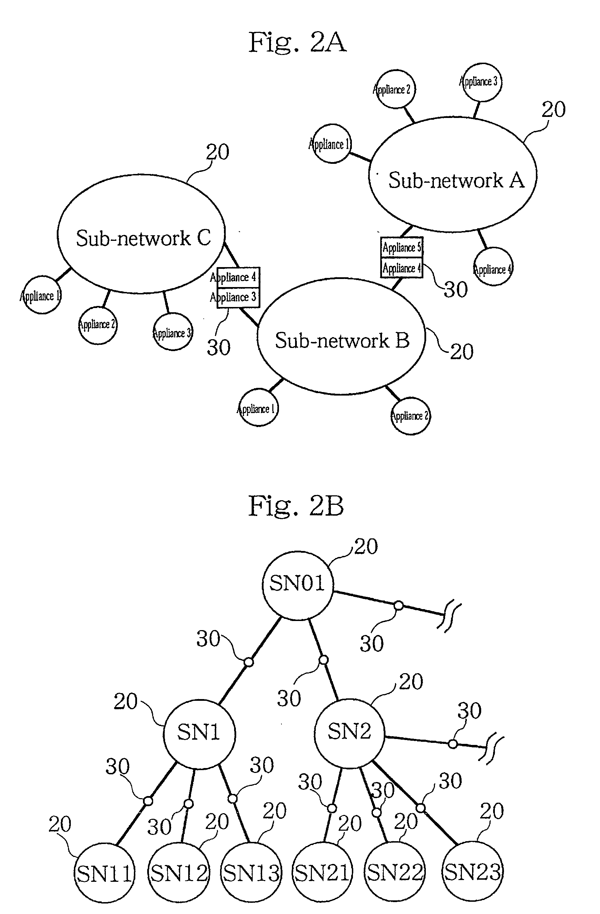

Further, the network may have other configurations than the one shown in the figure in which many appliances and sub-networks are connected radially from only one CPU 10, but, for example, many sub-networks each having a router (A router is a device that is placed between a plurality of sub-networks and achieves communication therebetween. In Fig. 1, the CPU performs this function. In different systems and appliances, IC circuits built into appliances perform this function.) are connected via a router to which an end of each of the constituting elements is connected or via an appliance that performs the function of a router, or as shown in Fig.2(b), individual appliances and sub-networks are hierarchically connected, as it were, forming trees.

In the figure, reference numerals 20 denote sub-networks, or appliances that practically serve as sub-networks, which are connected by infrared rays, electric power lines, wireless communications, or the like, and reference numerals 30 denote routers, or appliances that perform the function, which are connected to a plurality of sub-networks.

At smaller scales, it is employed in such a simple combination in which, in the case where a television receiver is connected to a VCR, the VCR reads out a time signal received by the television receiver in order to display accurate time and makes corrections as necessary.

Furthermore, in order to effectively perform these functions of the network, various standards (e.g., ET-2101, JEM-1439, etc.) are specified and published by the Electronic Industries Association of Japan, the Japan Electrical Manufacturers' Association, or the like.

Moreover, protocols (standards for communication) and the like have been determined or developed.

In view of these, it of course has been considered and carried out that individual appliances (including sensors or the like) are provided with necessary equipment and functions, such as a communication processing function, during manufacturing so that they can perform suitable functions in home networks.

### Background Art - From the aspect of problems to be solved by the invention

In home networks, however, when the constituting elements such as appliances and sub-networks are newly installed, problems arise in assignment and acquisition of the identification codes (identification numbers, IDs, and addresses).

Specifically, in order for a home network to perform its function appropriately, it is essential that the system side is informed of exactly what types of appliances are connected and accordingly identification codes are assigned to individual appliances.

In addition, it is also essential for individual appliances to recognize their own identification codes. However, this is in fact not so simple.

For example, in the case of a new installation of a telephone, since the contents of communication are merely voices and images, a telecommunication company, such as NTT or the like, is only necessary to sequentially assign an unused number according to the location and the station that manage there as new installations of appliances occur.

By contrast, in home networks, what types of appliances are currently equipped and what types of appliances will be newly equipped vary home to home, and they are unknown to the system sides. It is possible that when a home network is newly installed, an expert worker supplies the system with information about currently equipped appliances, but it is impractical that a system engineer visits the site and supplies the system with the information each time a new appliance is equipped or in other words purchased.

In addition, it is undesirable that in the installation of an electric refrigerator or an air conditioning appliance, a dealer employee supplies such information to the system when the appliance is installed.

In addition, it is often the case that in each home, people in the home themselves do not exactly know the numbers and types of electric appliances they have. Moreover, it is not surprising that people do not keep track of the exact identification number for each appliance one by one.

In nursing homes for the elderly, the problems are exacerbated because although the same appliances tend to be provided in each room (elderly family), they are not exactly the same, and still more, there are changes of the rooms in addition to purchases and disposals of the appliances.

In order to cope with these problems, it is not impossible that, in the manufacturers of appliances, identification codes such as production serial numbers are stored in individual appliances during the manufacture. If this is the case, however, it is necessary that the identification numbers be electronically given to and stored in the ICs or the like of numerous appliances that flow in the mass production line, but this is very difficult. Further, under the current trend towards the global market, it is practically impossible to assign individual appliances unique individual identification codes that are unified and standardized internationally.

Also, there is a possibly of duplicate identification codes. In particular, in the kind of home in which a home network is equipped, it is common that a plurality of appliances of same type are equipped in one home, and in such a case, the possibility of duplicate identification codes further increases.

In addition, because there will be many homes that adopt home networks in the future, duplicate identification codes could be created all over the country, for example, each time an electric appliance manufacturer launches a new product, and thus the inconvenience could further exacerbate.

Moreover, in an office, when many new employees join the company or when old model appliances are replaced with new model ones, many appliances of same type are newly installed. In this case, duplicate identification codes particularly tend to be created.

Further, increasing the amount of information for an identification code, i.e., the bit number, to cope with these problems also poses many problems in terms of cost, memory capacity, amount of information necessary to be transmitted, and so forth.

Accordingly, there is a need for development of a technique regarding a home network in which, when a constituting element of the network such as an appliance and a sub-network is additionally equipped, the system reliably recognizes the added appliance and assigns an identification code thereto, whereas the appliance that is assigned the identification code also reliably recognizes the assigned identification code.

Additionally, there are various home electric appliances such as electric irons and vacuum cleaners that are disconnected from the power supply for the purpose of storage when unused, are unable to be equipped with communication means other than power lines, such as wireless communications, because of cost problems, and have large power consumption during use. In these cases, if the identification codes are not managed appropriately, problems arise in reducing their power consumption and in reducing the power consumed at a time, for example.

Furthermore, even relatively heavy-weight appliances such as television receivers could be disconnected from the power supply when a room change or a general house cleaning is carried out; moreover, power shutdown could occur in some accidents such as a lightning strike. In such cases, not only do problems arise in the functions and the controls relating to the appliances but also disruption can be caused in the home network system as a whole when the television receivers and the like perform the function of a router.

In addition, home network systems are constantly improved, and it is necessary to deal with the improvement.

Accordingly, there is a need for development of a technology that satisfies these requirements at low cost and in a simple manner.

### DISCLOSURE OF THE INVENTION

The present invention has been accomplished in view of the foregoing problems and provides a home network in which a newly installed appliance or the like requests the system side of the home network to assign a unique identification code of the appliance or the like, and the system side and the appliance side are configured to have the functions of requesting assignment of an identification code and of acquiring it. In addition, each of the appliances is configured to have a means to cope with a temporary power shutdown. In addition, it is also configured to be capable of coping with a power failure. Moreover, it is also configured to deal with upgrading of the system. Specifically, the following configurations are employed.

According to a first aspect of the invention, when an appliance (including a sub-network and a sensor) is started for the first time after a home network has been activated, a request for assignment of an identification code or an address of the appliance for the home network is made from an appliance side (including a router to which the appliance belongs) to the home network, and in response to this, an identification code of the appliance is directly or indirectly determined according to a predetermined procedure and is then transmitted to the requesting appliance, the predetermined procedure being such that the home network side directly or indirectly assigns numbers in the order of the requests from the appliances or according to the types of various appliances, or that it assigns a sub-network identification code to the router to which the appliance belongs.

Thereafter, each of the appliances uses the identification code to perform suitable functions in the home network in cooperation with other appliances, and consequently, the home network as a whole performs its optimum function.

According to a second aspect of the invention, identification codes of individual appliances in a home network are separately determined by each communication means to which the appliances belong, such as power lines, infrared rays, and low-powering wireless communications, and additionally a two-stage configuration is employed which includes a sub-network identification code determined by the place of installation or the like and an appliance identification code of an appliance in the sub-network. In principle, the former, i.e., the sub-network identification code, which concerns the communication means that involves the appliance, is acquired first. Subsequently, the latter is directly or indirectly acquired.

According to a third aspect of the invention, a router of a sub-network acquires an identification code for the sub-network as one of the appliances of the router. Subsequently, it assigns identification codes for the sub-network to appliances that are connected to the sub-network. Then, upon a request for assignment of an identification code from an appliance that is in effect installed in the system, an identification code for the sub-network is assigned, which consequently serves as the identification code for the home network. This makes it easy to connect and control, for example, individual appliances that communicate with one another in sub-networks via power lines, and specifically, to reduce power consumption and maximum power consumption, for example.

According to a fourth aspect of the invention, the request for assignment of an identification code includes notification of types of individual appliances (including sensors or the like). Thus, the home network recognizes the type of appliance that has been newly installed and accordingly it performs suitable and optimum functions in compliance with a predetermined program.

According to a fifth aspect of the invention, an unused value is sequentially assigned from the predetermined sequential numbers based on information about the type of appliance contained in the request for an identification code. Thus, the identification code is determined to be a simple and short value for the types of appliances that are not likely to exist in large numbers in a home network, such as *kotatsus* and electric laundry washing machines. In addition, this makes it easy to select and manage appliances that have large power consumption in reducing their power consumption and maximum power consumption, for example.

According to a sixth aspect of the invention, of a plurality of routers in a home network, a specific, parent router assigns identification codes to individual appliances so that duplicate identification codes can be prevented and that it is possible to reduce the need for routers that are built into appliances and the need for providing a router for each sub-network, which serve the purpose of acquiring identification codes taking the whole network into consideration, and to reduce the resulting cost increase. Further, in reality, relatively expensive appliances that can use a plurality of communication means serve as parent routers, such appliances including television receivers, remote controls accompanying them, intercommunication system units with television, and personal computers, and effectiveness of the system thus increases.

According to a seventh aspect of the invention, an appliance independently performs its original functions, such as refrigerating and air-conditioning, when installed in a home or the like in which a home network is not provided. But when a home network is provided afterwards or when the appliance is installed in a home in which a home network has already been provided, the appliance is automatically assigned an identification code from the home network and thereafter performs suitable functions as a member of the home network using the assigned identification code.

According to an eighth aspect of the invention, an appliance side makes a request for assignment of an identification code that the appliance requires to a home network side at an appropriate time, so the appliance can perform suitable functions in the home network earlier.

According to a ninth aspect of the invention, an identification code that an appliance side requests a home network side to assign uses the information about the month and date or the hour, minute, and second at which the request is made, and consequently, duplicate identification codes are not produced. In addition, obsolete appliances and unused appliances can be easily detected.

According to a 10th aspect of the invention, an identification code is assigned by adding a sequential number for each type of appliance, and therefore, the process is simple and duplicate identification codes are not created.

According to an 11th aspect of the invention, of a plurality of routers in a home network, one router becomes a parent router to coordinate assignment of identification codes to individual appliances. Therefore, the load of the router from each appliance is reduced, and duplicated identification codes are not created.

According to a 12th aspect of the invention, an appliance stores an identification code thereof into a non-volatile memory that can be written at least one time after power has been recovered (including the time of initial use), the memory particularly being such that is a ROM after having been written until the next power shutdown. Then, when power is recovered (power is turned on) after the putting away, a power failure, or the like, whether the identification code thereof is stored or not is checked first, and if stored, necessary information exchange or the like is carried out with the home network using the stored identification code.

It should be noted that it is preferable that the information about the appliances that are installed in the home network and are managed by the router, which is stored in the router, also be stored in the non-volatile memory.

According to a 13th aspect of the invention, the registration of an appliance that is determined to have been unused is deleted at various occasions in a simple and reliable manner.

According to a 14th to a 17th aspects of the invention, if a newly installed appliance has an improved (upgraded) router function, the newly installed appliance performs the router function in place of an old router.

For this purpose, the information about the appliances installed in the home network that is stored in the old router is transmitted to the newly installed appliance. In addition, it is of course possible that the old appliance be configured to perform a back-up function for the new router as necessary.

### BRIEF DESCRIPTION OF THE DRAWINGS

Fig. 1 is a schematic view showing a home network.

Fig. 2 is a schematic view showing another embodiment of the home network.

Fig. 3 is a configuration diagram focusing on a portion that makes an identification code assignment request, focusing on appliances (including sub-networks or the like) of Embodiment 1 of the present invention.

Fig. 4 is a configuration diagram focusing on a portion of the home network side (parent router side) according to the embodiment that performs an identification code assignment.

Fig. 5 is a flowchart according to Embodiment 2 of the present invention illustrating an identification code acquisition of each of appliances.

Fig. 6 is a flowchart illustrating assignment of a unique identification code to each of appliances in a home network according to Embodiment 3 of the present invention.

Fig. 7 is a flowchart illustrating an identification code acquisition of each of appliances according to Embodiment 4 of the present invention.

Fig. 8 is a flowchart showing the start-up of a child router according to Embodiment 5 of the present invention.

Fig. 9 shows the configuration of a message in a home network according to the present invention.

Fig. 10 shows the procedure for deleting the registration of unused appliances according to Embodiment 6 of the present invention.

Fig. 11 shows the procedure of operation of an appliance in response to power failures or the like according to Embodiment 7 of the present embodiment.

Fig. 12 shows the procedure for deleting the registration of discarded appliances and unused appliances according to Embodiment 8 of the present invention.

Fig. 13 shows the procedure of the operation for upgrading of a system according to Embodiment 9 of the present invention.

### DESCRIPTION OF THE REFERENCE NUMERALS

1 refrigerator
2 air conditioning appliance
3 *kotatsu* (Japanese heating apparatus comprising a low table with a heater underneath)
4 lighting appliance
5 microwave oven
6 electric laundry washing machine
7 television receiver and VCR
8 clock
9 telephone
10 CPU, parent router, home network
101 controlling section
11 electric wire
12 infrared ray
13 wireless communication
20 sub-network (individual appliance)
21 identification code assignment-requesting means
211 transmission section of identification code assignment-requesting means
22 timer
23 means for receiving a start-up signal
24 means for detecting start-up
25 identification code reception-controlling means
251 receiving section of identification code reception-controlling means
26 appliance main unit section
27 appliance main unit-controlling section for home network compatible appliance
271 identification code-storing section
30 router
300 identification code assignment request-receiving section
31 identification code referring and generating section
32 identification code holding section
33 new identification code process-controlling section
34 identification code transmitting section
35 individual appliance-controlling and adjusting section

### BEST MODE FOR CARRYING OUT THE INVENTION

The present invention is detailed below referring to preferred embodiments thereof.

### EMBODIMENT 1

The present embodiment is of a type in which an individual appliance requests a control section of a home network to assign an identification code for the appliance, and the home network generates and assigns the identification code.

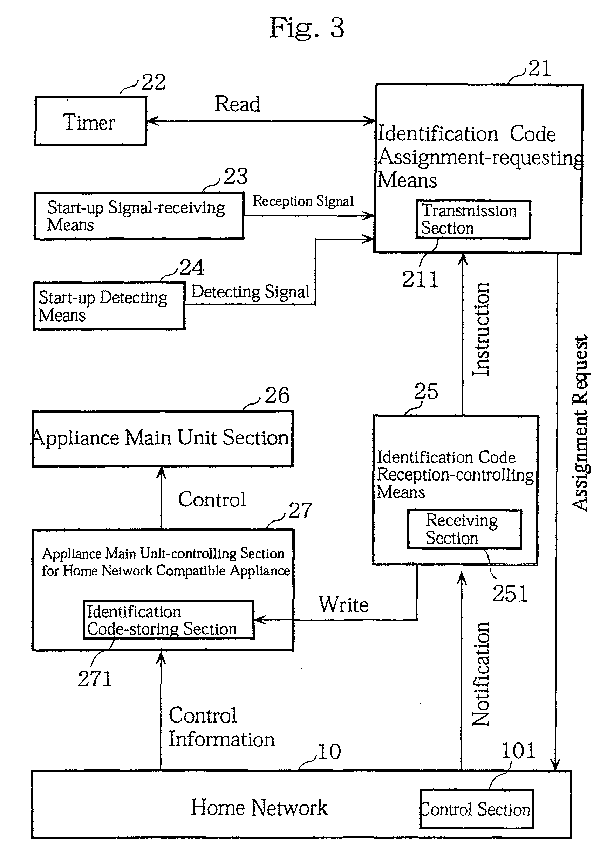

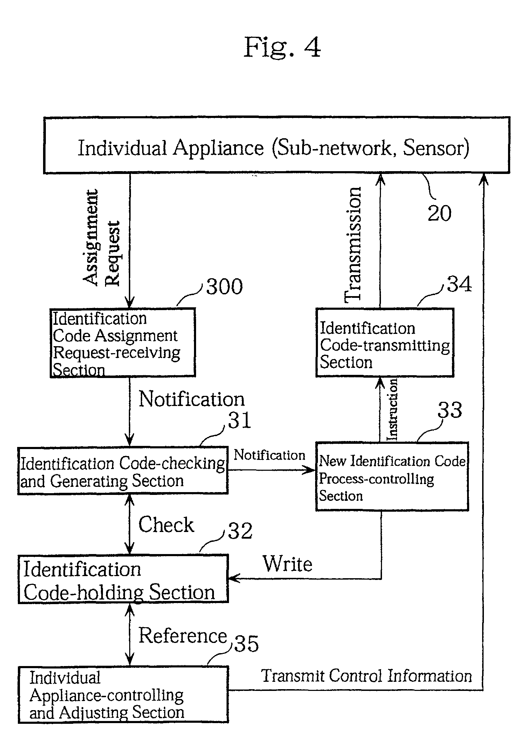

With reference to Figs. 3 and 4, the present embodiment is detailed below.

Fig. 3 shows the configuration of the appliance side. In the figure, reference numeral 21 denotes an identification code assignment-requesting means having a transmission section 211 therein. Reference numeral 22 denotes a clock. Reference numeral 23 denotes a means for receiving a start-up signal for the home network. Reference numeral 24 denotes a means for detecting the start of the main unit of an appliance. Reference numeral 25 denotes a means for controlling the reception of the identification code of an appliance that has been transmitted from a home network 10 side, and the reception-controlling means 25 has a receiving section 251. Reference numeral 26 denotes a main unit section of the appliance. Reference numeral 27 denotes a section for controlling the main unit of a home network compatible appliance, and the controlling section incorporats an identification code storing section 271.

Reference numeral 10 denotes a home network incorporating a controlling section 101, or more precisely, a parent router or a CPU in Fig. 1.

Fig. 4 shows the configuration of the home network side. In the figure, reference numeral 300 denotes an identification code assignment request-receiving section. Reference numeral 31 denotes an identification code checking and generating section. Reference numeral 32 denotes an identification code-holding section. Reference numeral 33 denotes a new identification code process-controlling section. Reference numeral 34 denotes an identification code transmitting section. Reference numeral 35 denotes an individual appliance-controlling and adjusting section.

Reference numeral 20 denotes an appliance that makes a transmission request for an identification code. First, the operation of the appliance side is described.

The identification code assignment-requesting means requests the main unit section or the controlling section of the home network to assign an identification code of itself either periodically using a timer or based on the start-up signal of the home network, specifically, the detection of power supply with a predetermined wavelength, or based on the start-up signal of the main unit of the appliance, specifically, power-on or the like,.

If, in response to the request, an identification code is sent in within a predetermined time, for example within 500 milliseconds, the identification code reception-controlling means 25 writes the identification code into the identification code storing section 271 of the home network compatible appliance main unit-controlling section 27 in the appliance, and at the same time makes the identification code assignment-requesting means 21 inoperative from then on. Thus, if an identification code is not sent in, the identification code assignment-requesting means 21 continues to request the home network 10 to assign an identification code according to a predetermined program from then onward.

The home network compatible appliance main unit-controlling section 27 refers to the identification code in the identification code-storing section 271, which is incorporated therein, detects control information that is transmitted from the home network 10 and is directed to itself, and transfers the information to the appliance main unit section 26. Thus, the appliance main unit section 26 performs more appropriate functions based on the control information from the home network.

Specific examples are as follows. In a VCR, when displaying time or when starting and stopping recording, a built-in clock incorporated in the main unit of the VCR is not used but instead, time information sent from the home network, i.e., accurate time information from a broadcast station received by a television receiver or a radio receiver that is connected to the home network is used; alternatively, even when the built-in clock is used, time information from a broadcast station is indirectly used to constantly adjust the built-in clock accurately. It should be noted that, during the manufacture of the appliance, the controlling section of each appliance is of course made to incorporate programs and circuits are incorporated such that the control information that is sent from the home network and is directed to the appliance takes priority over the control information that is incorporated in itself.

Next, the operation of the home network side is detailed.

Upon receiving an identification code assignment request from an individual appliance, the identification code assignment request-receiving section 300 reports the reception to the identification code checking and generating section 31. The identification code-checking and generating section 31 generates a new identification code that does not have a duplicate by referring the identification code-holding section 32, and reports the new identification code to the new identification code process-controlling section 33. The new identification code process-controlling section 33 newly writes the reported identification code into a predetermined location in the identification code-holding section 32, and at the same time, lets the identification code-transmitting section 34 transmit the identification code to the appliance that has made the request.

When transmitting control information to individual appliances, the individual appliance-controlling and adjusting section 35 sequentially transmits predetermined control information referring to the identification codes stored in the identification code-holding section 32. Thus, it is made possible to transmit and receive the control information or the like about the appliance that is assigned the newly written identification code, and consequently, the appliance that is newly installed in the home network also receives the control for the whole home network.

Specific examples include the following. After a home network has been configured, lightings and air conditioning appliances in the classrooms are off during the time when class is not conducted, unless a cleaner inserts a special card into a switch unit.

It should be noted that a time schedule for each of the classrooms has been input beforehand into the individual appliance-controlling and adjusting section. The requests for identification codes from the lighting appliances and the air conditioning appliances in the classrooms contain the information regarding the classroom in which the appliances exist, so the assigned identification codes contain the information regarding the classroom to which the appliances belong. Thus, the home network of course recognizes the information.

For another example, when detection of fire is received from a newly installed fire alarm, such is reported to the user through a mobile telephone.

### EMBODIMENT 2

The present embodiment relates to a technique of assigning identification codes by classifying appliances according to their types.

In home networks designed for homes, unlike in those for offices, most appliances have a general upper limit to the number of appliances. For example, there are few homes in which every member of the family has his/her own laundry washing machine, and moreover, it is highly unlikely that each member has a plurality of laundry washing machines.

For this reason, it is only necessary that classification (identification) symbols for types of appliances and numerals from 1 to 8, or 1 to 16 in some cases, be prepared beforehand, and selection is made therefrom for different types of appliances. It should be noted that, both domestically and internationally, it is not particularly difficult to classify appliances according to their types and to assign classification (identification) symbols in a standardized manner, and in fact this has already been suggested and carried out. For example, according to a certain object class code, it has been suggested that coffee machines are assigned B0, coffee mills are assigned B1, rice cookers are assigned BB, laundry washing machines are assigned C5, gas meters are assigned CE, and so forth.

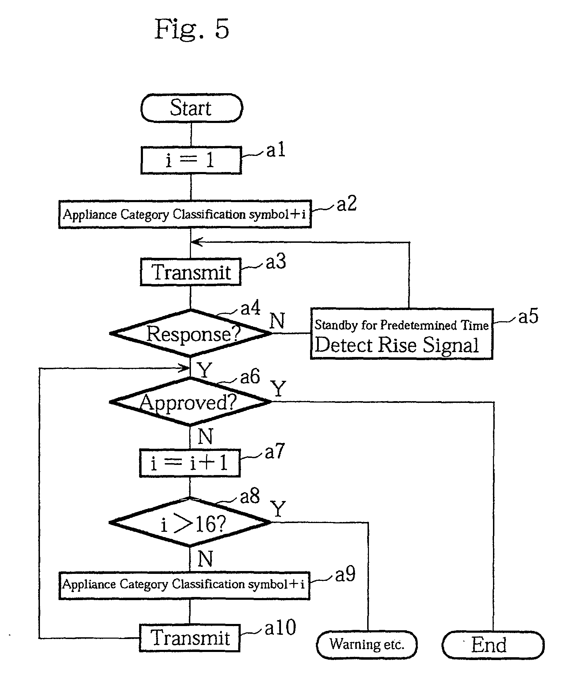

Referring now to Fig. 5, the present embodiment is detailed below. In the present embodiment, an appliance generates an identification code in which a numeral that indicates, for example, the order of the installation of the appliance is added to a classification symbol that indicates its type, and the appliance requests the home network side to assign the generated identification code number. As seen in Fig. 5:
(a1) First, the appliance takes 1(01) as "i".
(a2) An identification code is generated in which "i" is added to an appliance classification symbol that has been input beforehand. For example, when the appliance is a laundry washing machine, an identification code C501 is generated.
(a3) This identification code is transmitted to the home network side.
(a4) If the home network has been provided in the home in which the appliance is installed, a response is made within a predetermined time.
(a5) If the home network has not been provided, no response comes back, so the appliance stands by for a predetermined time and makes the transmission again, for example.
(a6) If the response indicating approval is received, the appliance recognizes and stores the transmitted identification code as the identification code of the appliance itself. Thereafter, the appliance is turned on/off according to control information transmitted with the identification code from the home network, or conversely, it transmits the information regarding on/off to the home network with the identification code.
(a7) If the response indicating rejection is received, the appliance generates a new identification code by making i = i + 1.
(a7) However, when "i" is equal to or greater than 17, or is equal to or greater than 9 in some appliances, a warning indicating such is issued to the user, for example.
(a9) When "i" is equal to or less than the upper limit value, a new identification code is generated in the same manner as described in (a2) above. Thus, specifically, the code C501 in the above case may become C502.
(a10) Under this condition, the new identification code is transmitted to the network side. By repeating the procedure described above, assignment of identification codes is carried out.

### EMBODIMENT 3

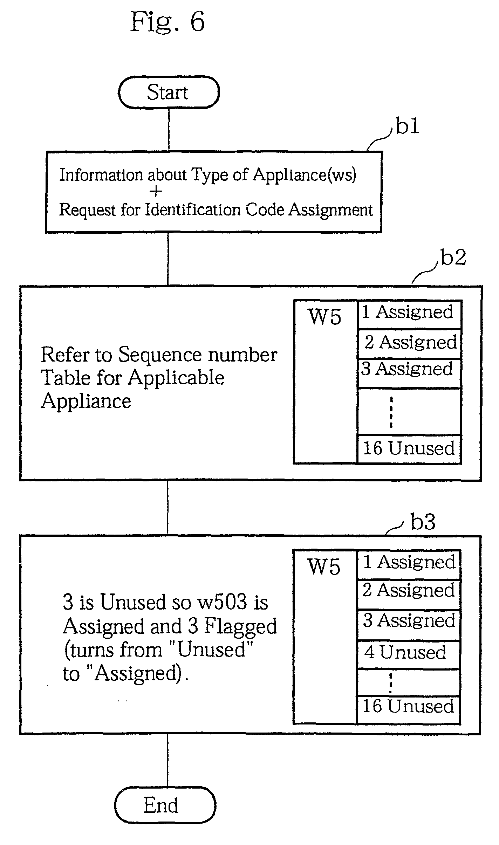

The basics of the present embodiment are the same as those of the foregoing Embodiment 2. A difference is that the network side generates identification codes. Referring to Fig. 6, the procedure is described below.

A parent router retains a sequence list of identification codes for each appliance type; when the router receives an assignment request for an identification code from each individual appliance together with information regarding its appliance type (b1), an identification code is generated in which the classification symbol for the appliance and an unused numerical value are combined (b2), and a flag indicating such is attached to the sequential number assigned to the identification code (b3).

Under these conditions, the home network performs its function with the newly installed appliance.

### EMBODIMENT 4

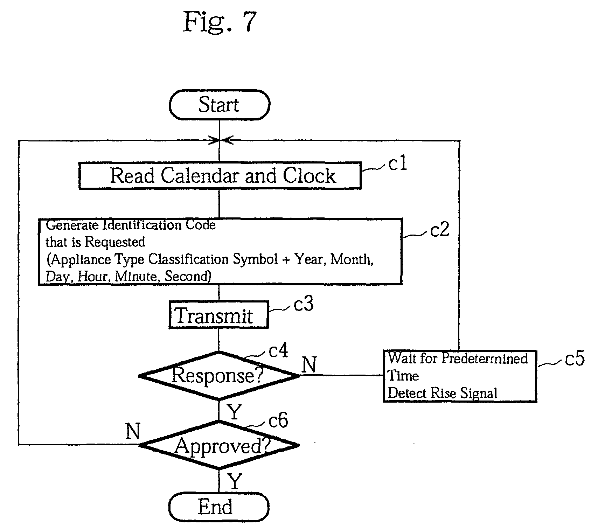

In the present embodiment, as shown in Fig. 7 which shows the procedure, when assignment of a required identification code is requested from the individual appliance side to the home network side and the appliance side generates an identification code in which the classification code of the appliance and a numeral is combined, the numeral portion is not a predetermined sequential number but a combination of calendar information and clock information (c2).

Accordingly, the generation of duplicate identification codes is prevented when many appliances of same type exist in a given home network, for example when many word processors and personal computers exist in an office or when many home appliances exist in a nursing home for the elderly.

The procedure of the present embodiment is basically the same as that shown in Fig. 5. It should be noted that different kinds of appliances such as various centers etc., lighting equipment, and the like, are not always equipped with calendars or clocks. In view of this, such a configuration is also possible that the home network side reads out a built-in calendar or the like and generates a numerical value including the information about the date and hour when an identification code assignment request was received from an individual appliance, as in Embodiment 3 above.

### EMBODIMENT 5

The present embodiment relates to the start-up of a child router in each sub-network.

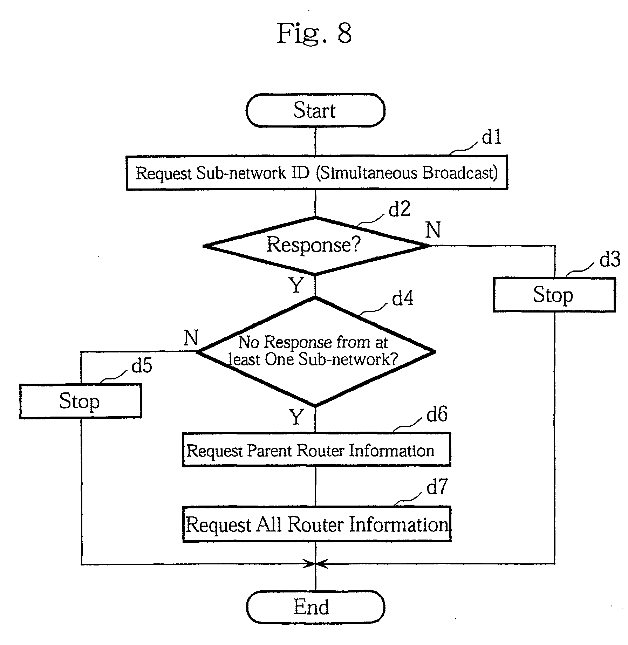

With reference to the procedure diagram of Fig. 8, the present embodiment is detailed below.
(d1) A child router sets a provisional sub-network identification code (hereafter referred to as "sub-network ID"), for example, to be 0X00. If it has been set hardwarewise, the set value is used as its own provisional sub-network ID. Under this condition, a message for requesting the identification code for the whole sub-network to which the child router is connected is sent to the whole system to which it is connected (to all the sub-networks) by simultaneous broadcast. It should be noted that the reason why simultaneous broadcast is used is that a receiving end of the request cannot be specified since the identification codes of existing routers are not known.
(d2) It waits for a response.
(d3) If there is no response, it is determined that there is no other router (a parent router does not exist), and the function as a router is stopped.
(d4) If a response is received from at least one sub-network (at least one router exists) and no response is received from at least one sub-network (a router does not exist in at least one sub-network), a start-up operation as a router is entered.
(d5) If there are responses from all the sub-networks to which it is connected, the function as a router is stopped since an infinite loop can be caused.
(d6) Parent router information is requested to any one of the routers from which their sub-network identification codes are sent.
(d7) Based on the parent router information, it acquires from the parent router a sub-network identification code for the sub-network to which it is connected but no sub-network identification code has yet been assigned, and the information for all the routers

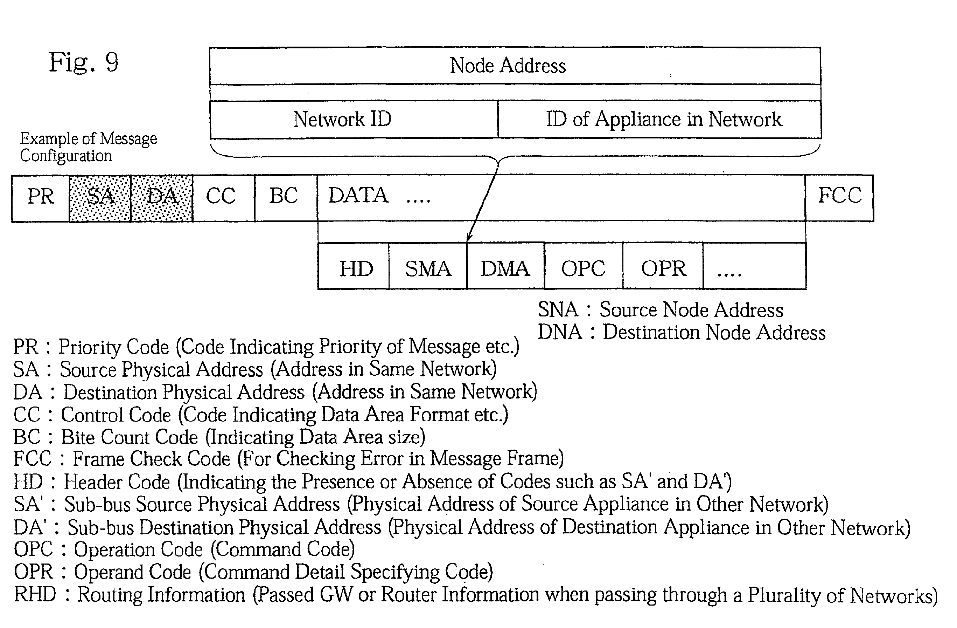

Thus, the function of a child router is performed. As a consequence, appropriate functions are performed when messages having the configuration shown in Fig. 9 (including signal messages through ultrasonic waves and infrared rays) are exchanged in the home network.

### EMBODIMENT 6

The present embodiment relates to handling of an appliance that has no longer existed in a home network.

With the rapid technological advancement nowadays, old type appliances that have not been used can continue to be registered in a home network unless some preventive action is taken. If this is left unattended, problems can arise in the assignment of identification codes to newly installed appliances, and moreover, disruptions or malfunctions can be caused in the whole system. In view of this problem, a router or a home network system assigns an identification code that contains the installation year and month to each of the appliances, and stores these according to types of appliances. Then, the presence or absence of an appliance is checked according to a prescribed procedure, and if it is confirmed that the appliance does not exist, the registration is deleted.

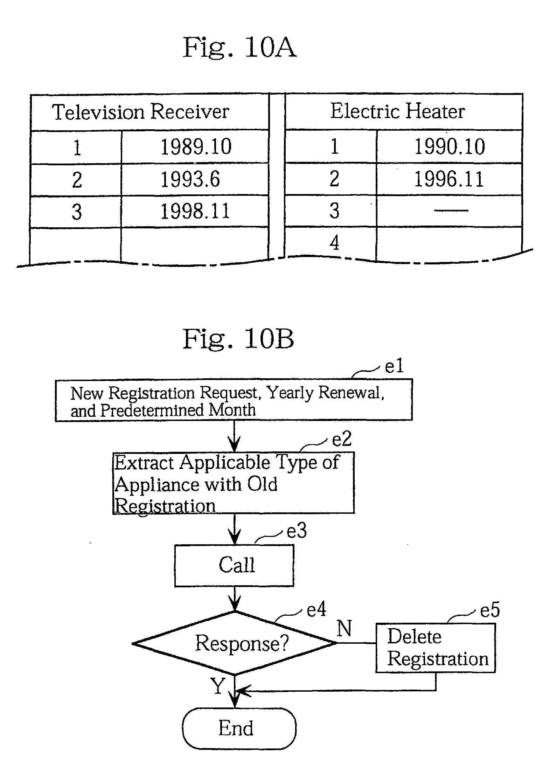

Following the flowchart shown in Fig. 10A, the detail is given below referring also to Fig. 10B.
(e1) Each router or a parent router stores the years and months in which the identification codes were requested and assigned, in a sequential number table in which types of appliances are classified, as shown in Fig. 10A. It should be noted that these years, months, and sequential numbers of assignment also serve as the identification codes for the appliances, but, due to restriction on transmission capacity or the like, other shorter numerical values may be assigned for the identification codes and may be managed together. In addition, the router recognizes if there occurs a factor that necessitates deletion of an appliance registration, such as a request for registration from a newly installed appliance, the elapse of a certain time period after registration that is specified by type of the appliance, and the sequential number table being filled up.
(e2) An appliance with an old registration (installation) is extracted based on the years and months in which identification codes are requested and assigned, which are stored in the router.
(e3) The presence or absence of the appliance is checked by a direct interrogation or an indirect method, such as confirmation of the elapse of a certain time period in which some information is not reported from the appliance.
(e4) The absence is confirmed through the responses, the absence of the notification of information for a certain time period, or the like.
(e5) The registration of the appliance is deleted.

### EMBODIMENT 7

The present embodiment relates to an operation of an appliance side when the power supply is temporarily cut off due to a power failure or storage of the appliance.

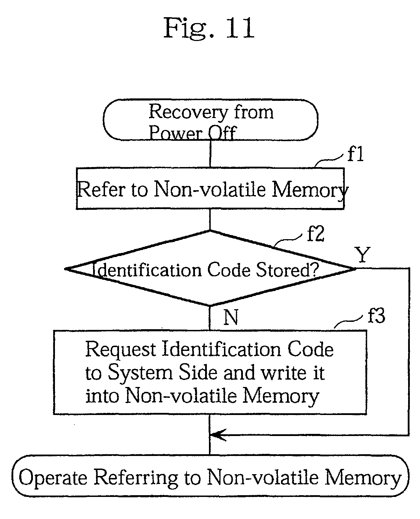

Fig. 11 shows the procedure of the operation of an appliance in accordance with the present embodiment.

First, an appliance writes the identification code thereof that has been assigned from the home network into a non-volatile memory that can be written at lease one time after power is cut off.
(f1) A built-in identification code assignment-requesting means refers to the memory after power recovery has been recognized or after the start-up for new installation.
(f2) The presence or absence of the identification code is checked.
(f3) If absent, assignment of an identification code of the appliance is requested to the home network, and the code is acquired and written into the memory.

Thereafter, using the identification code in the memory, a predetermined function is performed in the home network.

### EMBODIMENT 8

The present embodiment relates to an operation of a router and a home network side when power supply is temporarily cut off due to a power failure, storage, or house moving.

First, a router writes the identification codes of the appliances that it manages, which it has assigned during its operation in the home network, and accompanying information that has been acquired together with them into a non-volatile memory that can be written at least one time after the power supply is cut off.

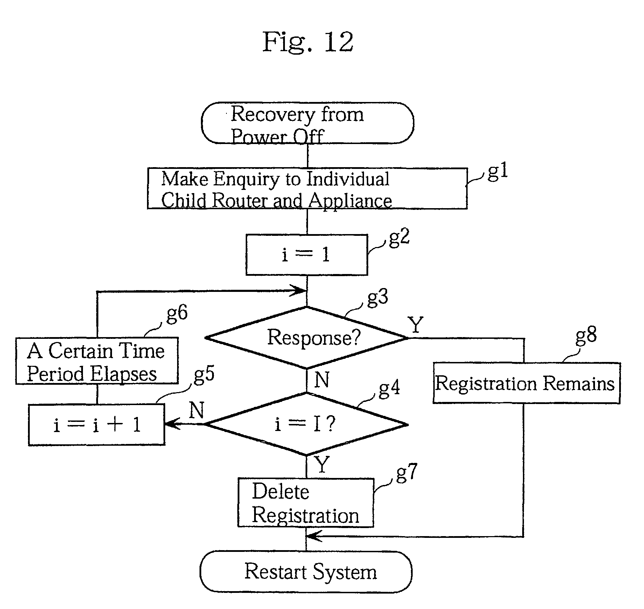

Then, as shown in Fig. 12, for each of the appliances, the router side carries out a procedure similar to that shown in Fig. 11.

(g1) First, a built-in identification code-assigning means refers to the memory after power recovery has been recognized or after the start-up operation for new installation of an appliance.

Next, the presence or absence of the appliance corresponding to each of the identification codes is sequentially checked in accordance with a predetermined procedure such as the elapsed time period from installation and the order of priority determined by type of appliance. Specifically, judgment is made based on the presence or absence of a response indicated by (g3), the presence or absence of a response to calls with a predetermined time interval and a predetermined frequency (I times), or the like. This judgment is made based on the presence or absence of transmission from the appliance within a predetermined time period and of course it takes into consideration the power shutdown during unused time and during unused season in cases of electric vacuum cleaners, electric *kotatsus*, and the like.

(g7) Finally, if it is confirmed that the appliance does not exist, the corresponding identification code in the home network is deleted.

(g8) If there is a response, the registration remains.

Subsequently, using the identification code in the memory, a predetermined function is performed in the home network. Thus, deletion can be quickly performed for an appliance that is no longer used due to house moving or the like.

It should be noted that, in the present embodiment, the appliance side may of course comprise a preventive means against incorrect registration deletion.

### EMBODIMENT 9

The present embodiment relates to an operation of a home network when being upgraded (version upgrading).

Various appliances and related techniques, such as televisions and broadcast contents for them, are constantly upgraded. So are home networks. For this reason, it is necessary to deal with renewals of home networks and renewals of appliances that perform the function of a router

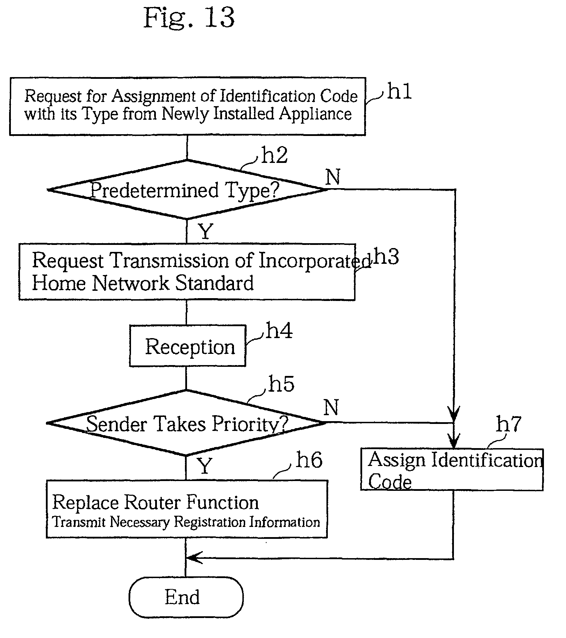

Referring now to Fig. 13, the procedure is described below.

It is self-evidently determined which appliance has a controlling portion, a chip, a CPU, or the like that performs the function of a router or a parent router. In addition, each of various appliances has roughly a fixed period of life.

(h1) to (h4) For these reasons, the appliance equipped with a chip or the like that can perform the function of a (parent) router stores in advance information about the grade of the home network in which the chip or the like can perform the function. Thus, when assignment of an identification code is requested upon new installation, the information about the grade is transmitted, or when transmission is requested from a receiver, it is transmitted.

In the meantime, the router side also acquires information about the grade of the newly installed appliance by requesting transmission of the information of the grade when assignment of a new identification code is requested, or by receiving it without requesting.

(h5) Under these conditions, it is judged which of the grades is higher.

(h6) If the grade of the newly installed appliance is newer, the appliance sends the information about the appliances that have already been installed and are managed by it, and then stops the function as a router, in order to turn over the router function.

The newly installed appliance that is supplied with this information then performs the function of a router.

This is similar to facsimile transmission in which facsimile machines exchange information regarding their grades, such as G3 and G4, and regarding paper sizes that can be output, and accordingly, a transmitting (calling) machine side, in principle, produces and sends image information that is compatible to the function and the like of the receiving (called) machine side.

(h7) If the appliance itself takes priority, it assigns an identification code to the newly installed appliance.

The present invention has been described thus far based on the preferred embodiments thereof, but it should be understood that the present invention is not limited thereto. Specifically, at least the following variations are possible.
1) The parent router may carry out only the assignment of identification codes.
2) The parent router may be specified by the user when the system is started.
3) Assignment, request, and acquisition of identification codes may be configured in a hierarchical manner, similar to telephone numbers or the like. Thus, each sub-network can contain a large number of appliances or the like, and a specific router in a sub-network may perform the function of a parent router within the sub-network.
4) A CPU that performs a key function does not need to exist in the network, but instead, each of the appliances may have a controller.
5) In a hierarchical network system, each level may have one parent router provided for that level.
6) Home electric appliance manufactures may specify or standardize the appliances that perform the function of a router to be, for example, intercommunication system units with television, televisions, or the like.
7) The appliance having a controller is specified according to the control content in a network. An example is a multi-purpose remote control for air cooling appliances, air conditioning appliances, large-sized televisions, and the like.
8) The bit number of identification codes and information to be transmitted may be specified according to the transmission capability of a sub-network. Specifically, for example, it may be large in the case of infrared rays or may be small in the case of the sub-networks in which low frequencies are used through power lines.
9) When one purchases an appliance that often performs the function of a router, or a large-sized appliance, such as a television receiver and an air conditioning appliance, personnel from manufacturer side, such as a dealer employee, often come into a room or a home in which the appliance is to be installed to install the appliance; if this is the case, upgrading of the system and deleting of the registrations of unused appliances may be carried out using CPUs or personal computers exclusively designed for the purpose.

### INDUSTRIAL APPLICABILITY

As will be appreciated from the foregoing description, according to the present invention, since appliances in a home network are assigned their unique identification codes legitimately and naturally, the home network can perform its functions and effects well. Specific examples include the following: a sensor detects the elapse of a certain time period after a heating appliance using kerosene has been turned on, a resulting increase in the room temperature, and a resulting carbon gas concentration increase in the room to a certain point, and then, a ventilation fan is turned on.

Moreover, each of the appliances does not need to have a portion (a circuit, a memory, or the like) that performs the function of a parent router, and therefore, cost increase can be avoided.

In addition, sensors and the like do not require dip switches or the like for ID, and therefore, corresponding cost can be reduced.

Furthermore, it can deal with improvement of the system.

In addition, renewal of the installed appliances and readjustment of old appliances can be easily made.

Still further, system management can be easily carried out according to operating conditions and storage conditions of various appliances, such as electric power failures or house movings.

## Claims

1. An identification code-assigning system in a home network that is a means for assigning an identification code to each of appliances in the home network having a plurality of sub-networks, comprising:
an appliance-side identification code assignment-requesting means for requesting a home network side to assign an identification code that identifies an appliance in the home network when the appliance is started for the first time after the home network has been configured, such as when the appliance is started for the first time after the appliance has been newly installed in a region where the home network has already been provided, when the appliance is started after the home network has newly been provided and activated, or when a start-up signal is received from the home network side at the activation; and
a system-side identification code generating and-reporting means for generating an identification code according to a predetermined procedure and reporting it to the appliance in response to a request for assignment of an identification code for the home network system from the appliance, the appliance being, in effect, newly installed in the home network irrespective of which of the newly installed appliance or the home network has been provided earlier.

2. The identification code-assigning system in a home network according to claim 1, wherein the appliance-side identification code assignment-requesting means comprises:
means for acquiring, prior to acquisition of the identification code, an appliance identification code for a sub-network to which the appliance belongs within the sub-network; and
means for acquiring a sub-network identification code assigned to the sub-network, subsequent to acquisition of the appliance identification code for the sub-network.

3. The identification code-assigning system in a home network according to claim 1 or 2, wherein:
the system-side appliance identification code-generating and reporting means is built into a sub-network, and comprises:
a means for acquiring a sub-network identification code for the home network according to a predetermined procedure in the home network subsequent to acquisition of an individual appliance identification code for the sub-network to which the appliance belongs;
a first means for assigning, after the home network identification code has been established, an identification code for the home network to each of the appliances that have been already connected to the sub-network; and
a second means for assigning an identification code for the sub-network to an appliance that is in effect newly installed in the system, in response to a request for assignment of an identification code for the system from the newly installed appliance.

4. The identification code-assigning system in a home network according to claim 1, 2, or 3, wherein:
the appliance-side identification code assignment-requesting means is such that, when requesting assignment of an identification code, a message that requests assignment of an identification code, contains a classification code representing a type of appliance determined by such as original functions, effects, and purposes thereof; and
the system-side identification code-generating and reporting means recognizes the type of the appliance that is to be in effect newly installed in the system based on the classification code representing the type of the appliance contained in the message that requests assignment of an identification code, and reports the classification code as well as the generated identification code of the appliance to a control section in order to be registered.

5. The identification code-assigning system in a home network according to claim 1, 2, 3, or 4, wherein:
when a request for assignment of an identification code is received from the identification code assignment-requesting means, the system-side identification code-generating and reporting means sequentially assigns unused numbers from the numbers predetermined for each classification to at least a specific type of appliance if the request contains a classification code of type of appliance.

6. The identification code-assigning means according to claim 1, 2, 3, 4, or 5, wherein:
the home network comprises a plurality of routers; and
the system-side identification code-generating and reporting means comprises:
a parent router-contained system-side identification code-generating and reporting means provided only in a specific router of the plurality of routers; and
a-general router-contained system-side identification code-generating and reporting means that is contained in a general router and reports a sub-network identification code assigned by the intra-parent router system-side identification code-generating and reporting means to the appliances in the sub-network.

7. An identification code acquiring system for an home network compatible appliance, comprising:
an intra-sub-network identification code-storing means for storing an intra-sub-network identification code of the appliance in a home network;
a sub-network identification code-storing means for storing a sub-network identification code;
a sub-network identification code-requesting means that requests, using a predetermined means, the home network to assign a sub-network identification code of a sub-network to which the appliance belongs at a predetermined time after the sub-network identification code has been acquired at the first start-up or activation of the appliance, the predetermined means including a power line, a wireless communication, and an infrared ray and the predetermined time including a prescribed hour, a time interval, and a time when a notification is received from a home network side newly provided after the appliance has been installed; and
an identification code reception-controlling means that controls the identification code-requesting means so as to continue the request of assignment of an identification code of the appliance at the predetermined time until a response is received for the request from the sub-network identification code-requesting means, if there is no response to the request, and that controls the identification code-requesting means so as to stop further requests and stores the received identification code in the storing means, if a notification of the identification code is received from the home network side in response to the request.

8. An identification code acquiring system for an home network compatible appliance, comprising:
an intra-sub-network identification code-storing means that stores an intra-sub-network identification code of an appliance in a home network;
a sub-network identification code storing means that stores a sub-network identification code;
an intra-sub-network identification code-requesting means that sends an intra-sub-network identification code which has been created according to a predetermined program to the home network using a predetermined means and that requests the home network to assign it as the identification code of the appliance for the home network at a predetermined time, the predetermined means including a power line, a wireless communication, and an infrared ray, and the predetermined time including a time when the appliance is started up or activated for the first time, a predetermined hour, a predetermined time interval, and a time when a notification is received from a home network that is newly installed after the appliance has been installed; and
an identification code reception-controlling means that controls the storing means so as to store the intra-sub-network identification code as the intra-sub-network identification code of the appliance if there is no response to the request, and that controls the identification code-requesting means so as to create another identification code and to request again to assign the other identification code as the identification code of the appliance, if a notification of rejection is received.

9. The identification code-acquiring system for a home network compatible appliance according to claim 8, wherein the identification code-requesting means comprises a means for generating, when requesting assignment of a desired identification code in the home network, an identification code using at least one of calendar or clock information.

10. The identification code-acquiring system for a home network compatible appliance according to claim 8 or 9, wherein the identification code-requesting means comprises a means for generating, when requesting assignment of an identification code for the appliance in the home network, an identification code using a predetermined sequential number and an invariable classification code representing an appliance type determined by the appliance's original functions, effects, purposes, and the like.

11. A home network including an apparatus having the identification code acquiring means according to claims 7, 8, 9 or 10, comprising:
a plurality of routers;
wherein only one of the plurality of routers is a parent router having a function of assigning an identification code to an appliance that has in effect been newly installed in the home network according to a predetermined procedure in response to a request for assignment of an identification code from the identification code assignment-requesting means.

12. An appliance compatible with a home network system, comprising:
a storing means for storing an identification code of the appliance that has been acquired in the home network, the storing means being non-volatile and writable at least one time after power has been recovered;
an on-off recognizing means for recognizing on and off of a power supply;
a checking means for checking whether or not the identification code of the appliance is stored in the storing means in response to a recognition notification of power-on is received from the on-off recognizing means; and
an identification code-acquiring means that uses the identification code subsequently if the checking moans confirms that the identification code is stored, but lets the appliance request the home network to assign an identification code of the appliance if the checking means confirms that the identification code is not stored.

13. A router in a home network system, comprising:
an identification code information-storing means for storing, in relation to an appliance that requests an identification code for identifying the appliance in the home network with a classification code representing a type of the appliance, information containing an year of the request together with the type of the appliance and the identification code assigned thereto;
an existence confirming means for confirming the presence or absence of an appliance showing a long elapsed time from assignment of an identification code by carrying out at least either interrogation according to a predetermined procedure or confirmation of continuation of the absence of notification based on at least one information including a request of an identification code assignment from a given type of appliance newly installed in the home network, the number of identification codes that has been stored for a given type of appliance, the elapsed time from the assignment of an identification code, and changes of years and months;
a deleting means for deleting from the identification code information-storing means information about the appliance that has been determined to be absent if the existence confirming means determines that the appliance is absent.

14. A router function-performing means that is built into an appliance, comprising:
a router appliance classification-storing means for storing in advance classification of appliances that are capable of performing a router function;
a grade information transmission-requesting means that requests, when the appliance performs a router function in a home network system transmission of information about the grade of a router function of a newly installed appliance upon receiving a request for assignment of an identification code with a classification code representing the type of appliance from the newly installed appliance, if it is found that the classification code is stored in the router appliance classification-storing means by checking whether the classification code is stored therein or not;
a stored information-transmitting means that transmits information about appliances installed in the home network, the information being stored in the appliance in order to perform a router function, upon receiving the information about a grade of a router function if the grade of the received information is higher than the grade that the appliance is capable of performing; and
a stopping means for stopping the router function after the information has been transmitted for the purpose of upgrading.

15. A router function-performing means that is built into an appliance, comprising:
a stored information-transmitting means that transmits, when the appliance performs a router function in a home network system, information about appliances installed in a home network upon receiving from a newly-installed appliance a request for assignment of an identification code with information about a grade of a router function that the newly installed appliance is capable of performing and a classification code representing a type of the appliance if it is found that the grade of the newly installed appliance is higher than the grade that the appliance is capable of performing by comparing them; and
a stopping means for stopping the router function after the information has been transmitted for the purpose of upgrading.

16. A router function-performing means that is built into an appliance, comprising:
an identification code assignment-requesting means that assigns an identification code for a home network together with a classification code representing a type of appliance when the appliance is newly installed in the home network;
a grade information-returning means that returns information about a grade of a router function that the appliance is capable of performing if a home network side requests the appliance to transmit the information;
a received home network information-storing means that stores information about an appliance that is installed in the home network if the information is transmitted from the home network as a result of the acknowledgement; and
an upgrading means that lets the appliance perform a router function with a predetermined procedure after the information has been received.

17. A router function-performing means that is built into an appliance, comprising:
an identification code assignment-requesting means that assigns an identification code for a home network together with information about a grade of a router function that the appliance is capable of performing and a classification code representing a type of appliance when the appliance is newly installed in the home network;
a received home network information-storing means that stores information about an appliance that is installed in the home network if the information is sent from the home network as a result of transmission of the request; and
an upgrading means that lets the appliance perform a router function according to a predetermined procedure after the information has been transmitted.
